# EUROPEAN PATENT APPLICATION

(11) **EP 4 645 813 A1**
(43) Date of publication of application: **05.11.2025**
(21) Application number: 25172386.2
(22) Date of filing: 24.04.2025
(51) Int. Cl.: H04L 45/64, H04L 43/10, H04L 45/741

(54) **MULTI-PROTOCOL UNDERLAY NETWORK TRACING**

(30) Priority: 03.05.2024 IN 202441035263; 08.08.2024 US 202418798580
(71) Applicant: Cisco Technology, Inc., San Jose, CA 95134-1706 (US)
(72) Inventor: RAJAMANICKAM, Jaganbabu, Kanata (CA); DUKES, Darren R., Ottawa (CA); SANKARANARAYANAN, Madhan, Chennai (IN); MURUGAN, Tamilselvan, Chennai (IN); SEKAR, Dhilip, Chennai (IN)
(74) Representative: Mathys & Squire

(57) **Abstract**

Devices, systems, methods, and processes for multi-protocol underlay network tracing are described herein. A network device associated with a first network protocol usually fails to detect other network devices that support a second network protocol, during trace routing. This can lead to incomplete and inaccurate path tracing. Thus, an edge device upon receiving an error response packet may determine whether the error response packet conforms to a network protocol supported by a host device. If the error response packet conforms to a different network protocol, the edge device may extract information required for path tracing from the error response packet. The extracted information may be included in a protocol agnostic encoding object and transmitted to the host device. The encoding object can be transmitted as a standalone message or can be appended in an error response packet. Thus, enabling underlay path tracing in end-to-end managed networks.

## Description

The present disclosure relates to communication networks. More particularly, the present disclosure relates to network tracing in multi-protocol underlay networks.

This application claims the benefit of Indian Provisional Patent Application No. 202441035263, filed May 3, 2024, which is incorporated by reference herein in its entirety.

### BACKGROUND

Network tracing typically involves tracking the path a data packet takes from a source to a destination across a network. This network tracing process may be required for various purposes, such as network troubleshooting, path discovery, or the like. For example, network tracing can help identify specific points (e.g., hops), within the network where frequent delays or failures occur. Similarly, network tracing can also be used to understand the path to optimize packet routing and network design.

A known approach for network tracing involves the communication of probe messages by a probing device to network devices along the path of the packet. The path is then traced based on responses received from these network devices. However, such an approach encounters challenges when the network includes network devices that support different network protocols than those supported by the probing device. Such devices may not be compatible with the probing device and consequently, may not be recognized by the probing device. As a result, the probing device may fail to identify these network devices and can sometimes be unaware of their existence in the path. This may lead to an incomplete and sub-optimal path tracing, which is undesirable.

### SUMMARY OF THE DISCLOSURE

Aspects of the invention are set out in the independent claims and preferred features are set out in the dependent claims. Features of one aspect may be applied to each aspect alone or in combination with other features.

Devices and methods for multi-protocol underlay network tracing in accordance with embodiments of the disclosure are described herein. In many embodiments, a device includes a processor, a network interface controller configured to provide access to a network, and a memory communicatively coupled to the processor. The memory includes a network tracing logic that is configured to receive an error response packet including an address of a first network device that supports a first network protocol. The network tracing logic is further configured to extract the address of the first network device from the error response packet, generate an encoding object that comprises the extracted address, and transmit the encoding object to a second network device that supports a second network protocol.

In a number of embodiments, the encoding object is a Type-Length-Value (TLV) object.

In a variety of embodiments, the encoding object is transmitted as a standalone message to the second network device.

In more embodiments, to transmit the encoding object to the second network device, the network tracing logic is further configured to generate a new error response packet associated with the second network protocol, append the encoding object in the new error response packet, and transmit the new error response packet appended with the encoding object to the second network device.

In further embodiments, the network tracing logic is further configured to append a start marker to the new error response packet. The start marker is configured to indicate a start of the encoding object.

In additional embodiments, the new error response packet includes a Type-Length-Value (TLV) field and the encoding object is nested within the TLV field.

In numerous embodiments, the error response packet further includes at least one of: an error code, a service identifier, or vendor-specific information associated with the first network device.

In several embodiments, the error code is associated with a Time-To-Live (TTL) expiry error.

In still more embodiments, the error code is associated with a Packet-Too-Big (PTB) error.

In still further embodiments, the network tracing logic is further configured to extract, from the error response packet, at least one of: the error code, the service identifier, or the vendor-specific information.

In still additional embodiments, the encoding object further includes at least one of: the error code, the service identifier, or the vendor-specific information extracted from the error response packet.

In yet more embodiments, the first network protocol is associated with an underlay network and the second network protocol is associated with an overlay network.

In still yet more embodiments, the network tracing logic is further configured to receive a probe request packet from the second network device, add an encapsulation to the probe request packet based on the first network protocol, and transmit the probe request packet with the encapsulation to one of the first network device or a third network device that supports the first network protocol. The error response packet is received in response to transmitting the probe request packet with the encapsulation.

In many further embodiments, the probe request packet is associated with the second network protocol.

In many additional embodiments, the probe request packet includes a Time-To-Live (TTL) value.

In still yet further embodiments, the network tracing logic is further configured to propagate the TTL value of the probe request packet in the encapsulation.

In still yet additional embodiments, the device is an edge device that supports the first network protocol and the second network protocol.

In several more embodiments, a device includes a processor, at least one network interface controller configured to provide access to a network, and a memory communicatively coupled to the processor. The memory includes a network tracing logic that is configured to transmit a probe request packet associated with a first network protocol and receive, in response to transmitting the probe request packet, an encoding object that comprises an address of a network device. The network device supports a second network protocol that is different from the first network protocol. The network tracing logic is further configured to obtain the address of the network device from the encoding object.

In numerous additional embodiments, the network tracing logic is further configured to present the obtained address as a part of a trace route path.

In further additional embodiments, a method includes receiving an error response packet including an address of a first network device that supports a first network protocol, extracting the address of the first network device from the error response packet, generating an encoding object that comprises the extracted address, and transmitting the encoding object to a second network device that supports a second network protocol.

Other objects, advantages, novel features, and further scope of applicability of the present disclosure will be set forth in part in the detailed description to follow, and in part will become apparent to those skilled in the art upon examination of the following or may be learned by practice of the disclosure. Although the description above contains many specificities, these should not be construed as limiting the scope of the disclosure but as merely providing illustrations of some of the presently preferred embodiments of the disclosure. As such, various other embodiments are possible within its scope. Accordingly, the scope of the disclosure should be determined not by the embodiments illustrated, but by the appended claims and their equivalents.

### BRIEF DESCRIPTION OF DRAWINGS

The above, and other, aspects, features, and advantages of several embodiments of the present disclosure will be more apparent from the following description as presented in conjunction with the following several figures of the drawings.
FIG. 1 is a schematic block diagram of an example network architecture in accordance with various embodiments of the disclosure;
FIG. 2 is a sequence diagram for path tracing between a source device and a destination device in accordance with various embodiments of the disclosure;
FIG. 3 is a schematic block diagram of an edge device that supports multi-protocol underlay network tracing in accordance with various embodiments of the disclosure;
FIG. 4 is a schematic block diagram of an edge device that supports multi-protocol underlay network tracing in accordance with various embodiments of the disclosure;
FIG. 5 is a schematic diagram of an example scenario for path tracing between a source device and a destination device in accordance with various embodiments of the disclosure;
FIG. 6 is a flowchart showing a process for generation and communication of an encoding object in accordance with various embodiments of the disclosure;
FIG. 7 is a flowchart showing a process for generation and communication of underlay information in accordance with various embodiments of the disclosure;
FIG. 8 is a flowchart showing a process for path tracing in a multi-protocol underlay network in accordance with various embodiments of the disclosure;
FIG. 9 is a flowchart showing a process for path tracing in a multi-protocol network in accordance with various embodiments of the disclosure; and
FIG. 10 is a conceptual block diagram for one or more devices capable of executing components and logic for implementing the functionality and embodiments described above.

Corresponding reference characters indicate corresponding components throughout the several figures of the drawings. Elements in the several figures are illustrated for simplicity and clarity and have not necessarily been drawn to scale. For example, the dimensions of some of the elements in the figures might be emphasized relative to other elements to facilitate understanding of the various presently disclosed embodiments. In addition, common, but well-understood, elements that are useful or necessary in a commercially feasible embodiment are often not depicted in order to facilitate a less obstructed view of these various embodiments of the present disclosure.

### DETAILED DESCRIPTION

In response to the issues described above, devices and methods are discussed herein that can perform underlay network tracing even when the underlay network conforms to a different network protocol than a device that initiated network tracing. Network tracing may typically involve tracking a path a packet takes from a source device to a destination device across a network. A known approach for network tracing involves communicating probe packets with progressively increasing Time-to-Live (TTL) values to trace a path from a source device to a destination device. In many examples, the source device may execute a traceroute tool for communicating the probe packets. Each probe packet's TTL value limits a number of hops the probe packet can make before being discarded, prompting a response packet from a last network device the probe packet traverses. By incrementing the TTL values, the traceroute tool maps out each hop along the path to the destination device, helping understand the path data takes through the network. However, such an approach encounters challenges when the path includes network devices that support different network protocols than those supported by the source device executing the traceroute tool. As a result, the source device often fails to recognize intermediate network devices associated with different network protocols, leading to incomplete and suboptimal network tracing.

To address these concerns, the devices and methods discussed herein leverage a network tracing logic executed on, for example, an edge device and/or a source device for performing multi-protocol network tracing. In several embodiments, path tracing (also referred to as "network tracing") to a destination device may begin with the source device communicating probe request packets with progressively increasing TTL values (e.g., hop limit values). The source device may support a first network protocol, and hence the probe request packets may also adhere to the first network protocol. In several additional embodiments, the destination device may also support the first network protocol. Each probe packet's TTL value limits a number of hops the probe packet can make before being discarded, prompting a response packet from a last network device the probe packet traverses. As the TTL value continues to increment, eventually a probe request packet reaches an edge device. The edge device may be situated at boundaries of a first network that supports the first network protocol and a second network (e.g., an underlay network) that supports a second network protocol, and may support both first and second network protocols.

In numerous embodiments, the edge device may decrement the TTL value to zero and communicate an error response packet to the source device. The error response packet may include an address of the edge device and may support the first network protocol. Upon receiving the error response packet, the source device may extract the address of the first edge device and other required information from the error response packet. Subsequently, the edge device may receive another probe request packet with an incremented TTL value. The edge device may decrement the TTL value, and prior to forwarding this probe request packet to a next hop (e.g., an intermediate network device supporting the second network protocol), the edge device may add an encapsulation (e.g., an outer header conforming to the second network protocol) to the probe request packet. In numerous additional embodiments, the encapsulation may include the decremented TTL value. Subsequently, the edge device may forward the encapsulated probe request packet to the next hop. The intermediate network device, upon receiving the encapsulated probe request packet, may decrement the TTL value in the encapsulation. If the decremented TTL value at the intermediate network device becomes zero, the intermediate network device may generate an error response packet including its address and communicate the error response packet to the edge device.

As the intermediate network device supports the second network protocol, the error response packet may also conform to the second network protocol and may be incompatible with the source device. To eliminate such incompatibility, the edge device may at least extract the address of the intermediate device from the error response packet and generate an encoding object that includes the extracted address. Subsequently, the edge device may communicate the encoding object to the source device.

In more embodiments, upon receiving the encoding object, the source device may extract the address of the intermediate network device from the encoding object. The edge device and the source device may execute the same process for all intermediate network devices till an error response packet from the destination device reaches the source device. Consequently, the source device is provided with addresses of all intermediate network devices located in the path to the destination device, regardless of their network protocol, leading to complete path tracing.

In a number of embodiments, the encoding object can be a Type-Length-Value (TLV) object that includes the address and other required information extracted from the error response packet. In further embodiments, the edge device may generate a new error response packet associated with the first network protocol and append the encoding object to the new error response packet for transmitting to the source device. For example, the edge device may nest the TLV object within a TLV field in the new error response packet. The source device may extract the address of the intermediate network device from the nested TLV object. In some more embodiments, the edge device may embed a start marker before appending the encoding object to the new error response packet. The start maker may be indicative of a start of the encoding object. In a variety of embodiments, the encoding object can be communicated by the edge device to the source device as a standalone message.

In the above described devices and method, the edge device extracts information required for tracing a multi-protocol underlay network from the error response packets conforming to different network protocols and generates encoding objects including the extracted information. Since these encoding objects are compatible and readable by the source device, the source device is able to trace a portion of the path that was previously invisible or inaccessible to the source device due to protocol differences.

Aspects of the present disclosure may be embodied as an apparatus, system, method, or computer program product. Accordingly, aspects of the present disclosure may take the form of an entirely hardware embodiment, an entirely software embodiment (including firmware, resident software, micro-code, or the like) or an embodiment combining software and hardware aspects that may all generally be referred to herein as a "function," "module," "apparatus," or "system." Furthermore, aspects of the present disclosure may take the form of a computer program product embodied in one or more non-transitory computer-readable storage media storing computer-readable and/or executable program code. Many of the functional units described in this specification have been labeled as functions, in order to emphasize their implementation independence more particularly. For example, a function may be implemented as a hardware circuit comprising custom VLSI circuits or gate arrays, off-the-shelf semiconductors such as logic chips, transistors, or other discrete components. A function may also be implemented in programmable hardware devices such as via field programmable gate arrays, programmable array logic, programmable logic devices, or the like.

Functions may also be implemented at least partially in software for execution by various types of processors. An identified function of executable code may, for instance, comprise one or more physical or logical blocks of computer instructions that may, for instance, be organized as an object, procedure, or function. Nevertheless, the executables of an identified function need not be physically located together but may comprise disparate instructions stored in different locations which, when joined logically together, comprise the function and achieve the stated purpose for the function.

Indeed, a function of executable code may include a single instruction, or many instructions, and may even be distributed over several different code segments, among different programs, across several storage devices, or the like. Where a function or portions of a function are implemented in software, the software portions may be stored on one or more computer-readable and/or executable storage media. Any combination of one or more computer-readable storage media may be utilized. A computer-readable storage medium may include, for example, but not limited to, an electronic, magnetic, optical, electromagnetic, infrared, or semiconductor system, apparatus, or device, or any suitable combination of the foregoing, but would not include propagating signals. In the context of this document, a computer readable and/or executable storage medium may be any tangible and/or non-transitory medium that may contain or store a program for use by or in connection with an instruction execution system, apparatus, processor, or device.

Computer program code for carrying out operations for aspects of the present disclosure may be written in any combination of one or more programming languages, including an object-oriented programming language such as Python, Java, Smalltalk, C++, C#, Objective C, or the like, conventional procedural programming languages, such as the "C" programming language, scripting programming languages, and/or other similar programming languages. The program code may execute partly or entirely on one or more of a user's computer and/or on a remote computer or server over a data network or the like.

A component, as used herein, comprises a tangible, physical, non-transitory device. For example, a component may be implemented as a hardware logic circuit comprising custom VLSI circuits, gate arrays, or other integrated circuits; off-the-shelf semiconductors such as logic chips, transistors, or other discrete devices; and/or other mechanical or electrical devices. A component may also be implemented in programmable hardware devices such as field programmable gate arrays, programmable array logic, programmable logic devices, or the like. A component may comprise one or more silicon integrated circuit devices (e.g., chips, die, die planes, packages) or other discrete electrical devices, in electrical communication with one or more other components through electrical lines of a printed circuit board (PCB) or the like. Each of the functions and/or modules described herein, in various embodiments, may alternatively be embodied by or implemented as a component.

A circuit, as used herein, comprises a set of one or more electrical and/or electronic components providing one or more paths for electrical current. In certain embodiments, a circuit may include a return path for electrical current, so that the circuit is a closed loop. In another embodiment, however, a set of components that does not include a return path for electrical current may be referred to as a circuit (e.g., an open loop). For example, an integrated circuit may be referred to as a circuit regardless of whether the integrated circuit is coupled to ground (as a return path for electrical current) or not. In various embodiments, a circuit may include a portion of an integrated circuit, an integrated circuit, a set of integrated circuits, a set of non-integrated electrical and/or electrical components with or without integrated circuit devices, or the like. In one embodiment, a circuit may include custom VLSI circuits, gate arrays, logic circuits, or other integrated circuits; off-the-shelf semiconductors such as logic chips, transistors, or other discrete devices; and/or other mechanical or electrical devices. A circuit may also be implemented as a synthesized circuit in a programmable hardware device such as field programmable gate array, programmable array logic, programmable logic device, or the like (e.g., as firmware, a netlist, or the like). A circuit may comprise one or more silicon integrated circuit devices (e.g., chips, die, die planes, packages) or other discrete electrical devices, in electrical communication with one or more other components through electrical lines of a printed circuit board (PCB) or the like. Each of the functions and/or modules described herein, in certain embodiments, may be embodied by or implemented as a circuit.

Reference throughout this specification to "one embodiment," "an embodiment," or similar language means that a particular feature, structure, or characteristic described in connection with the embodiment is included in at least one embodiment of the present disclosure. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to", unless expressly specified otherwise. An enumerated listing of items does not imply that any or all of the items are mutually exclusive and/or mutually inclusive, unless expressly specified otherwise. The terms "a," "an," and "the" also refer to "one or more" unless expressly specified otherwise.

Further, as used herein, reference to reading, writing, storing, buffering, and/or transferring data can include the entirety of the data, a portion of the data, a set of the data, and/or a subset of the data. Likewise, reference to reading, writing, storing, buffering, and/or transferring non-host data can include the entirety of the non-host data, a portion of the non-host data, a set of the non-host data, and/or a subset of the non-host data.

Lastly, the terms "or" and "and/or" as used herein are to be interpreted as inclusive or meaning any one or any combination. Therefore, "A, B or C" or "A, B and/or C" mean "any of the following: A; B; C; A and B; A and C; B and C; A, B and C." An exception to this definition will occur only when a combination of elements, functions, steps, or acts are in some way inherently mutually exclusive.

Aspects of the present disclosure are described below with reference to schematic flowchart diagrams and/ or schematic block diagrams of methods, apparatuses, systems, and computer program products according to embodiments of the disclosure. It will be understood that each block of the schematic flowchart diagrams and/or schematic block diagrams, and combinations of blocks in the schematic flowchart diagrams and/or schematic block diagrams, can be implemented by computer program instructions. These computer program instructions may be provided to a processor of a computer or other programmable data processing apparatus to produce a machine, such that the instructions, which execute via the processor or other programmable data processing apparatus, create means for implementing the functions and/or acts specified in the schematic flowchart diagrams and/or schematic block diagrams block or blocks.

It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, of the illustrated figures. Although various arrow types and line types may be employed in the flowchart and/or block diagrams, they are understood not to limit the scope of the corresponding embodiments. For instance, an arrow may indicate a waiting or monitoring period of unspecified duration between enumerated steps of the depicted embodiment.

In the following detailed description, reference is made to the accompanying drawings, which form a part thereof. The foregoing summary is illustrative only and is not intended to be in any way limiting. In addition to the illustrative aspects, embodiments, and features described above, further aspects, embodiments, and features will become apparent by reference to the drawings and the following detailed description. The description of elements in each figure may refer to elements of proceeding figures. Like numbers may refer to like elements in the figures, including alternate embodiments of like elements.

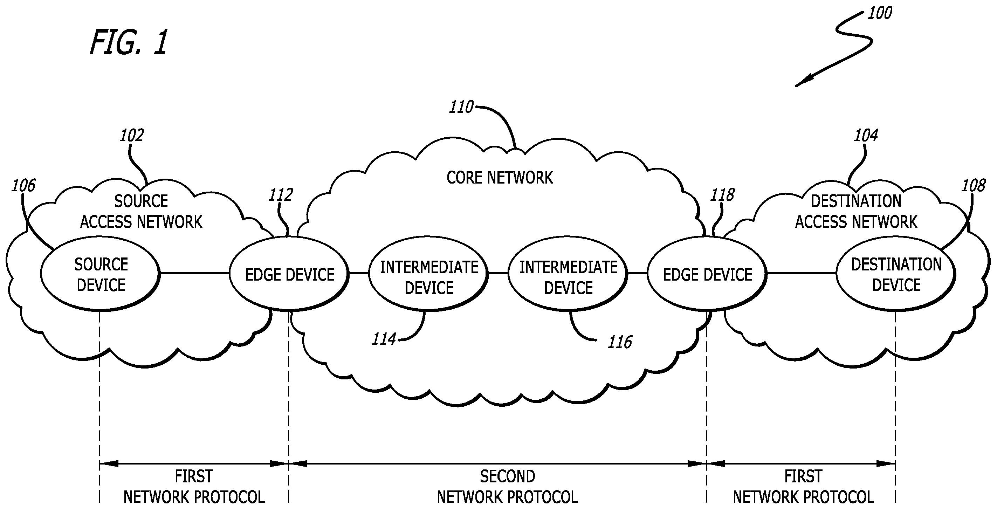

Referring to FIG. 1, a schematic block diagram of an example network architecture 100 in accordance with various embodiments of the disclosure is shown. In the embodiments depicted in FIG. 1, the network architecture 100 may include a source access network 102 and a destination access network 104. The source access network 102 may include a source device 106 and the destination access network 104 may include a destination device 108. The source device 106 and the destination device 108 may communicate with each other via a core network 110. The source device 106 may be coupled with the core network via a first edge device 112. The core network 110 may include one or more intermediate devices, for example, intermediate devices 114 and 116. The first edge device 112 can be coupled with the intermediate device 114. The destination device 108 can be coupled with the core network 110 via a second edge device 118. The second edge device 118 may be coupled with the intermediate device 116 of the core network 110.

In many embodiments, the source access network 102 may include, for example, a first group of network devices that are in communication with one another via one or more wired or wireless links. Examples of the source access network 102, may include, but are not limited to, wide area networks (WANs), local area networks (LANs), neighborhood area networks (NANs), personal area networks (PANs), home area networks (HANs), or Field Area Networks (FANs). In further embodiments, the first group of network devices in the source access network 102 may form an overlay network that enables communication of frames and packets by the group of network devices. The source access network 102 may be associated with a first network protocol. The first group of network devices may include, but are not limited to, a router, a personal computer, a repeater, a hub, a switch, an end user device, one or more enterprise devices, or the like.

In more embodiments, each network device in the source access network 102 may support the first network protocol (for example, an Internet Protocol version four "IPv4"). For the sake of ongoing description and in a non-limiting example, it is assumed that the first group of devices in the source access network 102 support the IPv4 protocol. For the sake of illustration, only one source device (for example, the source device 106) is shown to be included in the source access network 102 in FIG. 1. However, in practical implementations, the source access network 102 may include any number of network devices without deviating from the scope of the disclosure.

In a number of embodiments, the destination access network 104 may include a second group of network devices that are in communication with one another via one or more wired or wireless links. Examples of the destination access network 104, may include but are not limited to, WANs, LANs, NANs, PANs, HANs, FANs, or other similar networks. The second group of network devices in the destination access network 104 may form another overlay network that enables communication of frames and packets by the second group of devices. Examples of second group of network devices may include, but are not limited to, a router, a personal computer, a repeater, a hub, a switch, an end user device, one or more enterprise devices, or the like. The destination access network 104 may be associated with the first network protocol (for example, IPv4 protocol) or a different network protocol (for example, IPv6 protocol). For the sake of ongoing description and in a non-limiting example, it is assumed that the second group of devices in the destination access network 104 support IPv4 protocol. For the sake of illustration, only one destination device 108 is shown to be included in the destination access network 104 in FIG. 1. However, in practical implementations, the destination access network 104 may include any number of network devices without deviating from the scope of the disclosure.

In a variety of embodiments, the core network 110 may include a group of intermediate devices that form a communication channel (for example, a tunnel) between the source access network 102 and the destination access network 104. For example, the intermediate devices 114 and 116 may form a communication channel between the source device 106 and the destination device 108. The communication channel can be implemented by way of one or more wired or wireless links. Examples of the core network 110 may include, but are not limited to, WANs, LANs, NANs, PANs, HANs, and FANs. In many examples, the group of intermediate devices in the core network 110 may form an underlay network that enables communication of frames and packets by the group of intermediate devices. The core network 110 may be associated with a second network protocol (for example, IPv6 protocol). Examples of the intermediate devices 114 and 116 may include, but are not limited to, routers, repeaters, hubs, switches, access points, firewalls, or the like. Each intermediate device in the core network 110 may be associated with the second network protocol. For the sake of ongoing description and in a non-limiting example, it is assumed that the group of intermediate devices in the core network 110 are associated with the IPv6 protocol. For the sake of illustration, only two intermediate devices (for example, the intermediate devices 114 and 116) are shown to be included in the core network 110 in FIG. 1. However, in practical implementations, the core network 110 can include any number of intermediate devices without deviating from the scope of the disclosure.

In additional embodiments, the first edge device 112 that couples the source access network 102 with the core network 110 may support the first network protocol as well as the second network protocol. For example, the first edge device 112 may support IPv4 and IPv6 protocols if the source access network 102 conforms to IPv4 protocol and the core network 110 conforms to IPv6 protocol. The first edge device 112 may generate and route packets and frames that are compatible with the first group of devices in the source access network 102 and the group of intermediate devices in the core network 110.

In still more embodiments, the first edge device 112 may include a first processor, a first network interface controller, and a first memory coupled to the first processor. The first memory may include a network tracing logic that when executed by the first processor can perform one or more operations to transform a packet that conforms with the first network protocol in a form that conforms with the second network protocol and vice versa. The first network interface controller may provide access to the source access network 102 and the core network 110.

In still further embodiments, the second edge device 118 that couples the destination access network 104 with the core network 110 may support the first network protocol as well as the second network protocol. For example, the second edge device 118 may support IPv4 and IPv6 protocols if the source access network 102 conforms to IPv4 protocol and the core network 110 conforms to IPv6 protocol. The second edge device 118 may generate and route packets and frames that are compatible with the second group of devices in the destination access network 104 and the group of intermediate devices in the core network 110.

In still additional embodiments, the source device 106 may require communicating one or more packets or frames to the destination device 108. Prior to starting packet transmission, the source device 106 may require tracing a path that the packets or the frames will follow to reach the destination device 108. For example, the source device 106 may require tracing the path for various purposes such as path detection, Quality of Service (QoS) detection, delay point detection, network troubleshooting, or the like. In still additional embodiments, the source device 106 may include a second processor, a second network interface controller, and a second memory coupled to the second processor. The second memory may include a network tracing logic configured to perform one or more operations required for path tracing. For example, the one or more operations may include running a network diagnostic tool on the source device 106 for path tracing.

In conventional systems, for performing path tracing, a source network device may communicate a plurality of probe request packets with progressively increasing Time-to-Live (TTL) values (e.g., hop limit values). If the source network device supports IPv4 protocol, the probe request packets may also adhere to IPv4 protocol. Each probe packet's TTL value may limit a number of hops the probe packet can make before being discarded, prompting an error response packet (e.g., an Internet Control Message Protocol "ICMP" error packet) from a last network device the probe packet traverses. Each error response packet may also adhere to a network protocol supported by the network device that generated the error response packet. As the TTL value continues to increment, eventually a probe request packet reaches an intermediate device in a core network. In scenarios where the intermediate device supports a different protocol than the source network device, the error response packet generated by the intermediate device may be incompatible with the source network device. For example, an IPv4 ICMP message may not support inclusion of an IPv6 address or vice versa. As a result, the source network device may fail to identify all intermediate devices in the path that support differing network protocols, leading to incomplete path tracing. However, in the present disclosure, the network tracing logic implemented at the source device 106 and the first edge device 112 may perform one or more operations to overcome the shortcomings of conventional path tracing solutions.

In yet more embodiments, for performing path tracing, the source device 106 may generate and communicate a plurality of probe request packets with progressively increasing TTL values (e.g., hop limit values). If the source device 106 supports the first network protocol, the probe request packets may also adhere to the first network protocol. Each probe packet's TTL value may limit a number of hops the probe packet can make before being discarded, prompting an error response packet (e.g., an ICMP error packet) from a last network device the probe packet traverses. Each error response packet may include information, for example, an address, of a network device that generated the error response packet and may also adhere to a network protocol supported by the network device that generated the error response packet.

In still yet more embodiments, as the TTL value continues to increment, a first probe request packet may reach the first edge device 112. For example, the first probe request packet may include a TTL value "1". The first edge device 112 upon receiving the first probe request packet, may decrement the TTL value by one and the TTL value may become "0". Subsequently, the first edge device 112 may generate a first error response packet. Since the first edge device 112 supports the first network protocol, the first error response packet may be associated with the first network protocol. The first error response packet may be indicative of a type of error response packet and may include at least a portion of the first probe request packet. For example, the first error response packet may include a header of the first probe request packet and at least a part of a payload of the first probe request packet. In many further embodiments, upon receiving the first error response packet, the source device 106 may extract an address of the first edge device 112 and other required information from the first error response packet.

In many additional embodiments, as the TTL value continues to increment further, a second probe request packet with a TTL value "2" may reach the first edge device 112. The first edge device 112, upon receiving the second probe request packet, may decrement the TTL value to "1". The first edge device 112 may further add an encapsulation to the second probe request packet based on the second network protocol (for example, IPv6 protocol) supported by the next hop, for example, the intermediate device 114. The first edge device 112 may further include the decremented TTL value in the encapsulation. In many examples, encapsulating the second probe request packet based on IPv6 protocol may include adding an IPv6 outer header to the second probe request packet such that original second probe request packet becomes a payload in the encapsulated second probe request packet. The first edge device 112 may then forward the encapsulated second probe request packet to the intermediate device 114.

In still yet further, the intermediate device 114 may read the decremented TTL value in the encapsulation and further decrement the TTL value to "0". Based on the decremented TTL value being zero, the intermediate device 114 may generate a second error response packet (e.g., an IPv6 ICMP error packet). Similar to the first error response packet, the second error response packet may also include a header of the second probe request packet and at least a part of a payload of the second probe request packet. The second error response packet may further include an address of the intermediate device 114. For example, in the second error response packet, the intermediate device 114 may be mentioned as a source of the second error response packet. In still yet additional embodiments, the second error response packet may further include additional information such as an address length, a service identifier, an error code, vendor-specific information, or the like associated with the second network protocol (for example, IPv6 protocol). The address length may be a number of bits in the address supported by the second network protocol. The service identifier may be a unique identifier associated with a service provided by the core network 110, the error code may be a unique code associated with the error response packet that indicates a type of error that caused the generation of the error response packet. For example, the error code may be associated with a TTL expiry error. In some more examples, the error code may be associated with Packet-Too-Big (PTB) error. The intermediate device 114 may communicate the second error response packet to the first edge device 112.

In several embodiments, upon receiving the second error response packet, the first edge device 112 may determine whether the second error response packet is of the same network protocol supported by the source device 106 or a different network protocol. In the current example scenario, the first edge device 112 may determine that the second error response packet conforms to the second network protocol which is different from the first network protocol supported by the source device 106.

In response to determining that the second error response packet supports a different network protocol than the source device 106, the first edge device 112 may extract the address of the intermediate device 114 from the second error response packet. The first edge device 112 may also extract other required information, for example, the error code, the service identifier, the vendor-specific information, or the like, from the second error response packet. The first edge device 112 may generate an encoding object including the extracted information, for example, at least the address of the intermediate device 114. The encoding object can also include other information such as the error code, the service identifier, or the vendor-specific information extracted from the second error response packet. The encoding object may be compatible with the first network protocol (for example, IPv4 protocol). In several more embodiments, the encoding object can be a Type-Length-Value (TLV) object that includes the address and optionally the other information extracted from the second error response packet. A TLV object may include three fields, for example, a type field, a length field, and a value field. The value field may include actual data being transmitted. For example, in current context, the data can be the information extracted from the second error response packet. The type field may specify a data type or a purpose of the data. The length field may specify a size of the data, for example, in bytes.

Subsequently, the first edge device 112 may generate a new error response packet based on the second error response packet. For example, if the second error response packet is based on the IPv6 protocol supported by the intermediate device 114, the first edge device 112 may generate the new error response packet based on the IPv4 protocol supported by the source device 106. In numerous embodiments, the first edge device 112 may append the encoding object to the new error response packet and transmit the new error response packet with the appended encoding object to the source device 106. For example, the first edge device 112 may nest the encoding object within a TLV field in the new error response packet and transmit the new error response packet having the nested encoding object to the source device 106. In some embodiments, the first edge device 112 can also transmit the encoding object to the source device 106 as a standalone message.

In numerous additional embodiments, upon receiving the encoding object either appended in the new error response packet or as the standalone message, the source device 106 may obtain the address of the intermediate device 114. For example, the source device 106 may extract the address of the intermediate device 114 from the encoding object. The source device 106 can also extract the error code, the service identifier, the vendor-specific information, or the like included in the encoding object. In a similar manner, an address of the intermediate device 116 can be obtained by the source device 106 based on a third probe request packet that has a TTL value "3" when it reaches the first edge device 112.

As the TTL value continues to increment, eventually a probe request packet may reach the destination device 108 in the destination access network 104. The destination device 108 may match a destination address in the probe request packet with an address of an associated local device. Based on a match between the destination address in the probe request packet with the address of the local device, the destination device 108 may process the probe request packet. For processing the probe request packet, the destination device 108 may check the probe request packet for an underlying port (for example, a user datagram protocol port). In case, the underlying port is not accessible on the local device, the destination device 108 may transmit an error response message (for example, a port unreachable message) to the source device 106. The source device 106 may obtain the address of the destination device 108 based on the error response packet transmitted by the destination device 108. The source device 106 may match the obtained address with the destination address included in the probe request packet. In response to the obtained address matching the destination address of the probe request packet, the source device 106 may determine that the path has been successfully traced and network tracing process is complete. In further additional embodiments, the source device 106 may be further configured to present each of the obtained addresses as a part of a trace route path. In many examples, such presentation can be performed by way of a presentation device, for example, a display, associated with the source device 106.

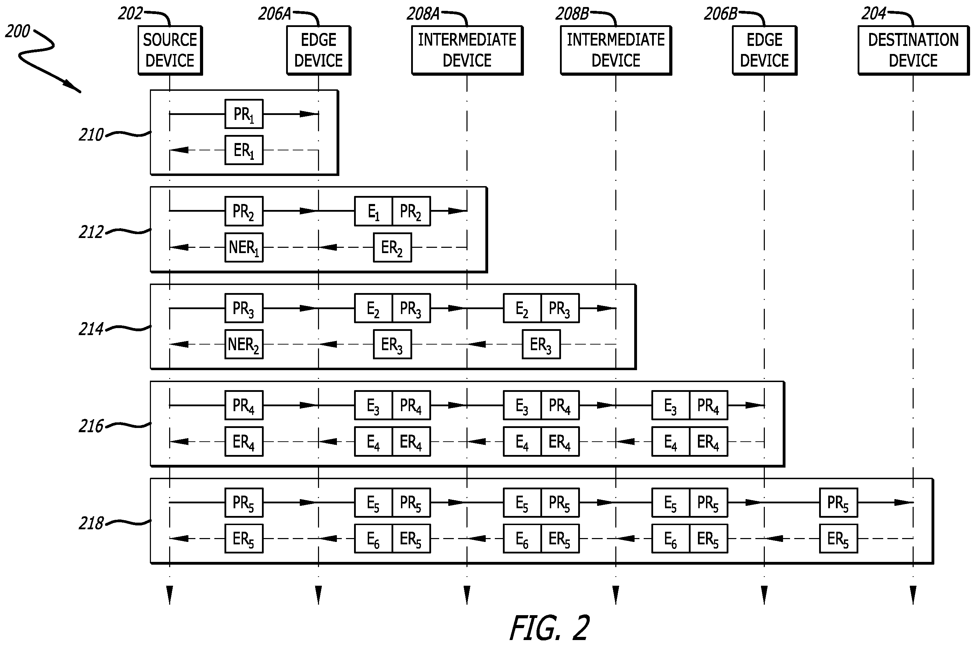

Although a specific embodiment for a network architecture suitable for carrying out the various steps, processes, methods, and operations described herein is discussed with respect to FIG. 1, any of a variety of systems and/or processes may be utilized in accordance with embodiments of the disclosure. For example, a full path from an Ethernet Virtual Private Network (EVPN) host to another EVPN host with a Virtual Extensible LAN (VxLAN) underlay can also be traced by the network tracking logic. In other words, the network tracking logic of the present disclosure may facilitate full path tracing irrespective of protocols differences in underlying network devices of the path. The elements depicted in FIG. 1 may also be interchangeable with other elements of FIGS. 2 - 10 as required to realize a particularly desired embodiment.

Referring to FIG. 2, a sequence diagram 200 for path tracing between a source device 202 and a destination device 204 in accordance with various embodiments of the disclosure is shown. In an example scenario depicted in FIG. 2, the source device 202 is shown to be communicatively coupled to the destination device 204 via edge devices 206A and 206B and intermediate devices 208A and 208B.

In many embodiments, the source device 202 and the destination device 204 may correspond to network devices located in different access networks (e.g., a first access network and a second access network) that support a first network protocol. The intermediate devices 208A and 208B may correspond to network devices located in a core network (e.g., an underlay network) that supports a second network protocol different from the first network protocol. The edge device 206A may be a network device, situated at boundaries of the source access network 102 and the underlay core network 110, which may support both the first and second network protocols. Likewise, the edge device 206B may be a network device, situated at boundaries of the second access network and the underlay core network, which can support both the first and second network protocols. For detecting the trace route path between the source device 202 and the destination device 204, the source device 202 may communicate multiple probe request packets with progressively increasing TTL values to obtain addresses of devices that form a route (e.g., a path) between the source device 202 and the destination device 204.

At 210, the source device 202 may communicate a probe request packet PR₁ to the destination device 204 via the edge device 206A. In a number of embodiments, the probe request packet PR₁ can be an ICMP request message based on the first protocol. The probe request packet PR₁ may include a hop limit value, for example, a TTL value "1". The edge device 206A may be an intermediate hop and may receive the probe request packet PR₁. The edge device 206A, upon receiving the probe request packet PR₁, may decrement the TTL value by one. Therefore, the TTL value may become "0". Subsequently, the edge device 206A may generate an error response packet ER₁ that includes an address of the edge device 206A. In a variety of embodiments, the error response packet ER₁ can be an ICMP response packet based on the first protocol. Upon receiving the error response packet ER₁, the source device 202 may extract the address of the edge device 206A and other required information from the error response packet ER₁.

At 212, the source device 202 may communicate a probe request packet PR₂ with an incremented TTL value, for example, the TTL value of the probe request packet PR₁ incremented by one. In other words, the TTL value in the probe request packet PR₂ may be equal to "2". The source device 202 may communicate the probe request packet PR₂ to the destination device 204 via the edge device 206A. The edge device 206A, upon receiving the probe request packet PR₂, may decrement the TTL value by one. Therefore, the decremented TTL value in the probe request packet PR₂ may become "1". In more embodiments, the edge device 206A may determine whether the probe request packet PR₂ is compatible with next hop, for example, whether the next hop supports the same network protocol as the probe request packet PR₂ or a different network protocol. In the current example, the edge device 206A may determine that the next hop for the probe request packet PR₂ is the intermediate device 208A which supports the second network protocol. Thus, the edge device 206A, may add an encapsulation E1 to the probe request packet PR₂ to make the probe request packet PR₂ compatible with the intermediate device 208A. The encapsulation E1 can be an outer header that conforms the second network protocol. The edge device 206A may further propagate the decremented TTL value in the encapsulation E1. For example, the edge device 206A may copy the decremented TTL value to the encapsulation E1. The edge device 206A may forward the encapsulated probe request packet E1{PR₂} to the intermediate device 208A.

The intermediate device 208A may read the decremented TTL value in the encapsulation E1 and decrement the TTL value to "0". Based on the decremented TTL value being zero, the intermediate device 208A may generate an error response packet ER₂. The error response packet ER₂ may include an address of the intermediate device 208A and may conform to the second network protocol. In additional embodiments, the error response packet ER₂ may further include additional information such as address length, a service identifier, an error code, vendor specific information, or the like associated with the second network protocol. The address length may be a number of bits in the address supported by the second network protocol. The service identifier may be a unique identifier associated with a service provided by the second network protocol and the error code may be a unique code associated with the error response packet that indicates a type of error that caused the generation of the error response packet. In a variety of embodiments, the error code may be associated with TTL expiry error. In further embodiments, the error code may be associated with PTB error.

The intermediate device 208A may communicate the error response packet ER₂ to the edge device 206A. Upon receiving the error response packet ER₂, the edge device 206A may determine whether the error response packet ER₂ is of the same network protocol supported by the source device 202 or a different network protocol. In current example scenario, the edge device 206A may determine that the error response packet ER₂ conforms to the second network protocol which is different from the first network protocol supported by the source device 202. Thus, the edge device 206A may extract the address of the intermediate device 208A from the error response packet ER₂. The edge device 206A may also extract the error code, the service identifier, the vendor-specific information, or the like from the error response packet ER₂.

Subsequently, the edge device 206A may generate an encoding object to convey the extracted information to the source device 202. For example, the edge device 206A may generate a TLV object with the extracted information included in the value field of the TLV object. The encoding object may be compatible with the source device 202. Subsequently, the edge device 206A may generate a new error response packet NER₁ that includes the encoding object. For example, the edge device 206A may append the encoding object to the new error response packet NER₁. The edge device 206A may then transmit the new error response packet NER₁ including the encoding object to the source device 202. Upon receiving the new error response packet NER₁ including the encoding object, the source device 202 may extract the address of the intermediate device 208A from the encoding object.

At 214, the source device 202 may communicate a probe request packet PR₃ with an incremented TTL value, for example, the TTL value of the probe request packet PR₂ incremented by one. In other words, the TTL value in the probe request packet PR₃ is equal to "3". The source device 202 may communicate the probe request packet PR₃ to the destination device 204 via the edge device 206A. The edge device 206A, upon receiving the probe request packet PR₃, may decrement the TTL value by one. Therefore, the decremented TTL value in the probe request packet PR₃ may become "2". Subsequently, the edge device 206A, may add an encapsulation E₂, based on the second network protocol, to the probe request packet PR₃. The encapsulation E₂ may include the decremented TTL value and the probe request packet PR₃. The edge device 206A may forward the encapsulated probe request packet E₂{PR₃} to the intermediate device 208A. The intermediate device 208A may read the decremented TTL value from the encapsulation E₂ and decrement the TTL value to "1". The intermediate device 208A may forward the encapsulated probe request packet E₂{PR₃} to the intermediate device 208B. The intermediate device 208B may read the decremented TTL value in the encapsulation E₂ and further decrement the TTL value in the encapsulation E₂ to "0". Based on the decremented TTL value being zero, the intermediate device 208B may generate an error response packet ER₃. The error response packet ER₃ may include an address of the intermediate device 208B along with other required information.

The intermediate device 208B may communicate the error response packet ER₃ to the intermediate device 208A which in turn transmits the error response packet ER₃ to the edge device 206A. Upon receiving the error response packet ER₃ that may be associated with the second network protocol, the edge device 206A may extract the address of the intermediate device 208B from the error response packet ER₃. Subsequently, the edge device 206A may generate an encoding object including the address of the intermediate device 208B and other required information. The encoding object may be compatible with the first network protocol. Subsequently, the edge device 206A may generate a new error response packet NER₂ that includes the encoding object. For example, the edge device 206A may append the encoding object to the new error response packet NER₂. The edge device 206A may then transmit the new error response packet NER₂ including the encoding object to the source device 202. Upon receiving the new error response packet NER₂ including the encoding object, the source device 202 may extract the address of the intermediate device 208A from the encoding object appended to the new error response packet NER₂.

At 216, the source device 202 may communicate a probe request packet PR₄ with a TTL value (e.g., "4") to the destination device 204. The source device 202 may communicate the probe request packet PR₄ to the destination device 204 via the edge device 206A. In other words, the edge device 206A may be an intermediate hop. The edge device 206A, upon receiving the probe request packet PR₄, may decrement the TTL value to "3". The edge device 206A may further add an encapsulation E₃ including the decremented TTL value "3" to the probe request packet PR₄. Subsequently, the edge device 206A may forward the encapsulated probe request packet E₃{PR₄} including the TTL value "3" to the intermediate device 208A. The intermediate device 208A may read and decrement the TTL value in the encapsulation E₃ to "2" and forward the encapsulated probe request packet E₃{PR₄} to the intermediate device 208B. The intermediate device 208B may read and decrement the TTL value in the encapsulation E₃ to "1" and forward the encapsulated probe request packet E₃{PR₄} to the edge device 206B.

In still more embodiments, the edge device 206B may decrement the TTL value in the encapsulation E₃ to "0", remove the encapsulation E₃, and generate an error response packet ER₄. The error response packet ER₄ may include the address of the edge device 206B. The error response packet ER₄ may be associated with the first network protocol. Since the error response packet ER₄ is to be routed to the edge device 206A via the intermediate devices 208A, 208B that support the second network protocol, the edge device 206B may add an encapsulation E₄, associated with the second network protocol, to the error response packet ER₄ and transmit the encapsulated error response packet E₄{ER₄} to the edge device 206A via the intermediate devices 208A and 208B. The edge device 206A may remove the encapsulation E₄ and since the error response packet ER₄ is associated with the first network protocol, the edge device 206A may forward error response packet ER₄ to the source device 202. The source device 202 may extract the address of the edge device 206B along with other required information from the error response packet ER₄.

At 218, the source device 202 may communicate a probe request packet PR₅ with a TTL value of "5" to the destination device 204 via the edge device 206A. The edge device 206A may receive the probe request packet PR₅ and decrement the TTL value to "4" and add an encapsulation E₅ including the decremented TTL value "4" to the probe request packet PR₅. Subsequently, the edge device 206A may forward the encapsulated probe request packet E₅{PR₅} to the intermediate device 208A. The intermediate device 208A may decrement the TTL value in the encapsulation E₅ to "3" and forward the encapsulated probe request packet E₅{PR₅} to the intermediate device 208B. The intermediate device 208B may further decrement the TTL value in the encapsulation E₅ to "2" and forward the encapsulated probe request packet E₅ {PR₅} to the edge device 206B. The edge device 206B may decrement the TTL value in the encapsulation E₅ to "1", remove the encapsulation E₅, copy the decremented TTL value "1" to the probe request packet PR₅, and transmit the probe request packet PR₅ with the decremented TTL value "1" to the destination device 204. The destination device 204, upon receiving the probe request packet PR₅, may verify a destination address included in the probe request packet PRs. The destination device 204 may perform such verification by matching a destination address included in a header of the probe request packet PR₅ with an address of an associated local device. Based on a match between the destination address in the probe request packet PR₅ with the address of the local device, the destination device 204 may process the probe request packet PR₅. For processing the probe request packet PR₅, the destination device 204 may check the header of the probe request packet PR₅ for an underlying port (for example, a user datagram protocol port). In an instance, when the underlying port may not be accessible on the local device, the destination device 204 may transmit an error response packet ER₅ (for example, a port unreachable message) to the source device 202. In an example, the error response packet ER₅ may be an ICMP port unreachable message. The error response packet ER₅ may conform to the first network protocol supported by the destination device 204. Therefore, the edge device 206B may add an encapsulation E₆, compatible with the second network protocol, to the error response packet ER₅. Subsequently, the edge device 206B may transmit the encapsulated error response packet E₆{ER₅} to the edge device 206A via the intermediate devices 208A and 208B. At the edge device 206A, the encapsulation E₆ is removed and the error response packet ER₅ is forwarded to the source device 202. The source device 202 may extract the address of the destination device 204 from the error response packet ER₅. In response to an obtained address matching the address of the destination device 204, the source device 202 may determine that the path has been successfully traced and network tracing process is complete.

In further embodiments, the source device 202 may be further configured to present each of the obtained addresses and other extracted information as a part of a trace route path. In many examples, such presentation can be performed by way of a presentation device, for example, a display, associated with the source device 106.

Although a specific embodiment for path tracing between a source device and a destination device suitable for carrying out the various steps, processes, methods, and operations described herein is discussed with respect to FIG. 2, any of a variety of systems and/or processes may be utilized in accordance with embodiments of the disclosure. For example, encoding objects generated at edge devices can be transmitted to a source device as standalone messages instead of being appended in new error response packets. In such embodiments, the source device may obtain underlay information (e.g., address of underlay network devices) from the encoding object and may not interpret the new error response messages (e.g., ICMP error response). In other words, the encoding object may serve as a protocol agnostic container that includes the underlay information of underlay network devices. The elements depicted in FIG. 2 may also be interchangeable with other elements of FIGS. 1 and 3 - 10 as required to realize a particularly desired embodiment.

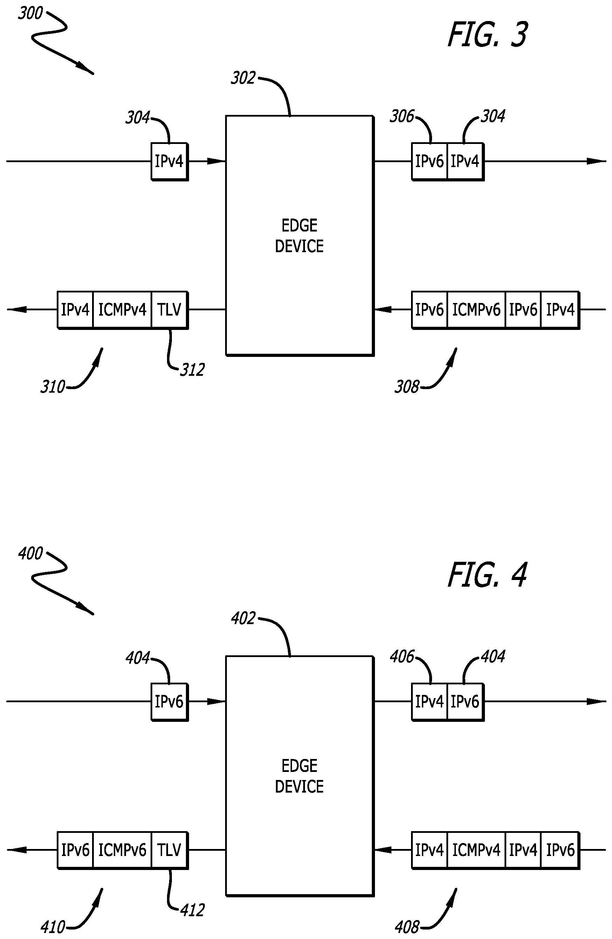

Referring to FIG. 3, a schematic block diagram 300 of an edge device 302 that supports multi-protocol underlay network tracing in accordance with various embodiments of the disclosure is shown. In the embodiments shown in FIG. 3, the edge device 302 may be a network device situated at boundaries of an IPv4 overlay network and an IPv6 underlay network. The edge device 302 may support both IPv4 protocol (e.g., a first protocol) and IPv6 protocol (e.g., a second protocol). The edge device 302 may execute a network tracing logic to facilitate multi-protocol underlay network tracing.

In many embodiments, the edge device 302 may receive a probe request packet, for example, an IPv4 packet 304. Upon determining that a network protocol supported by a subsequent hop of the IPv4 packet 304 is different from IPv4 protocol, (for example, is IPv6 protocol), the edge device 302 may encapsulate the IPv4 packet 304 with an IPv6 header 306 and propagate a TTL value included in the IPv4 packet 304 to the IPv6 header 306 after decrementing the TTL value by one. Subsequently, the edge device 302 may forward the encapsulated IPv4 packet 304 to the next hop.

As the encapsulated IPv4 packet 304 is routed from one hop to other, the TTL value may eventually expire. In response to an expiration of the TTL value in the encapsulated IPv4 packet 304 at a network device supporting IPv6 protocol, the edge device 302 may receive an encapsulated ICMPv6 error response packet 308. The encapsulated ICMPv6 error response packet 308 may include the encapsulated IPv4 packet 304 as a payload. The ICMPv6 error response packet 308 may be encapsulated in an IPv6 header.

Upon receiving the encapsulated ICMPv6 error response packet 308, the edge device 302 may remove the encapsulation, for example, remove the IPv6 header. The edge device 302 may further determine whether a network protocol supported by the ICMPv6 error response packet 308 is compatible with a next hop. In current scenario, the edge device 302 may determine that the IPv6 protocol supported by the ICMPv6 error response packet 308 may not be compatible with the next IPv4 based hop. Subsequently, the edge device 302 may extract required information from the ICMPv6 error response packet 308 and generate an encoding object 312. The encoding object 312 may include the extracted information, for example, an address of a network device that generated the ICMPv6 error response packet 308. The edge device 302 may subsequently generate a new error response packet 310 that is compatible with the IPv4 protocol. The new error response packet 310 may include the encoding object 312. In a number of embodiments, the edge device 302 may append a start marker to the new error response packet 310. The start marker may be appended before the encoding object 312 and may indicate a start of the encoding object 312. In several embodiments, the start marker can be any unique pattern that indicates an inclusion of the encoding object in the new error response packet 310.

In numerous embodiments, the edge device 302 may transmit the new error response packet 310 including the encoding object 312 to a next hop. When a source device of the probe request packet 304 receives the new error response packet 310, the source device may read the encoding object 312 from the new error response packet 310 and determine the address of a source of the ICMPv6 error packet 308. In a variety of embodiments, the encoding object 312 can be a TLV object 312.

Although a specific embodiment of an edge device that supports multi-protocol underlay network tracing suitable for carrying out the various steps, processes, methods, and operations described herein is discussed with respect to FIG. 3, any of a variety of systems and/or processes may be utilized in accordance with embodiments of the disclosure. For example, encoding objects generated at edge devices can be nested within TLV fields of compatible error response packets. The elements depicted in FIG. 3 may also be interchangeable with other elements of FIGS. 1, 2, and 4 - 10 as required to realize a particularly desired embodiment.

Referring to FIG. 4, a schematic block diagram 400 of an edge device 402 that supports multi-protocol underlay network tracing in accordance with various embodiments of the disclosure is shown. In the embodiments shown in FIG. 4, the edge device 402 may be a network device situated at boundaries of an IPv6 overlay network and an IPv4 underlay network. The edge device 402 may support both IPv6 protocol (e.g., a first protocol) and IPv4 protocol (e.g., a second protocol). The edge device 402 may execute a network tracing logic to facilitate multi-protocol underlay network tracing.

In many embodiments, the edge device 402 may receive a probe request packet (for example, an IPv6 packet 404) from a source device. Upon determining that a network protocol supported by a subsequent hop of the IPv6 packet 404 is different from IPv6 protocol, (for example, is IPv4 protocol), the edge device 402 may encapsulate the IPv6 packet 404 in an IPv4 header 406 and propagate a TTL value included in the IPv6 packet 404 to the IPv4 header 406 after decrementing the TTL value by one. Subsequently, the edge device 402 may forward the encapsulated IPv6 packet 404 to the next hop.

As the encapsulated IPv6 packet 404 is routed from one hop to other, the TTL value may eventually expire. In response to an expiration of the TTL value in the encapsulated IPv6 packet 404 at a network device supporting IPv4 protocol, the edge device 402 may receive an encapsulated ICMPv4 error response packet 408. The encapsulated ICMPv4 error response packet 408 may include the encapsulated IPv6 packet 404 as a payload. The ICMPv4 error response packet 408 may be encapsulated in an IPv4 header.

Upon receiving the encapsulated ICMPv4 error response packet 408, the edge device 402 may remove the encapsulation, for example, remove the IPv4 header. The edge device 402 may further determine whether a network protocol supported by the ICMPv4 error response packet 408 is compatible with a next hop. In current scenario, the edge device 402 may determine that the IPv4 protocol supported by the ICMPv4 error response packet 408 may not be compatible with the next IPv6 based hop. Subsequently, the edge device 402 may extract required information from the ICMPv4 error response packet 408 and generate an encoding object 412. The encoding object 412 may include the extracted information, for example, an address of a network device that generated the ICMPv4 error response packet 408. The edge device 402 may subsequently generate a new error response packet 410 that is compatible with the IPv6 protocol. The new error response packet 410 may include the encoding object 412. In a variety of embodiments, the encoding object 412 can be a TLV object 412.

In numerous embodiments, the edge device 402 may transmit the new error response packet 410 including the encoding object 412 to a next hop. When a source device of the probe request packet 404 receives the new error response packet 410, the source device may read the encoding object 412 from the new error response packet 410 and determine the address of a source of the ICMPv4 error response packet 408.

Although a specific embodiment of an edge device that supports multi-protocol underlay network tracing suitable for carrying out the various steps, processes, methods, and operations described herein is discussed with respect to FIG. 4, any of a variety of systems and/or processes may be utilized in accordance with embodiments of the disclosure. For example, an edge device may utilize nested TLV structure to trace multiple levels of underlay networks. The elements depicted in FIG. 4 may also be interchangeable with other elements of FIGS. 1 - 3 and 5 - 10 as required to realize a particularly desired embodiment.

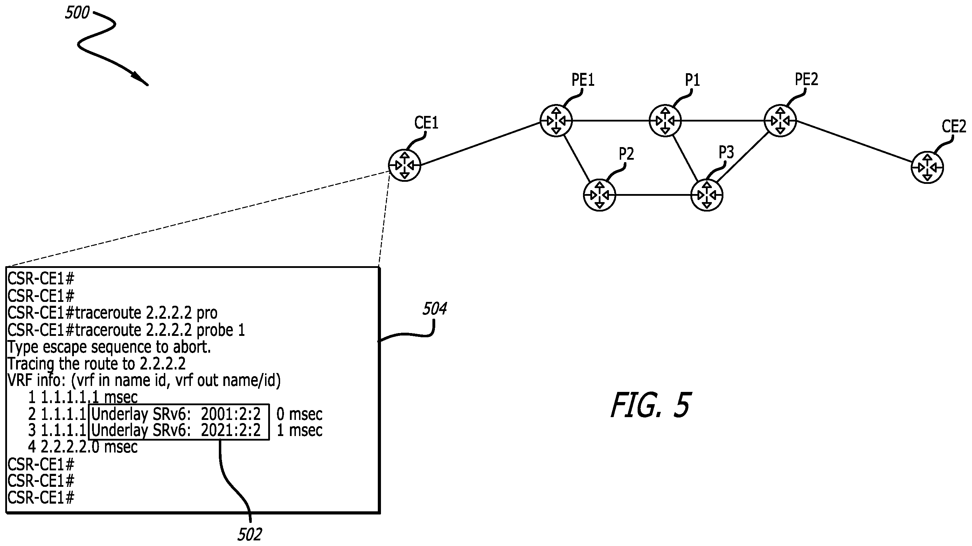

Referring to FIG. 5, a schematic diagram of an example computer network 500 for path tracing between a source device and a destination device in accordance with various embodiments of the disclosure is shown. The embodiments shown in FIG. 5 illustrate a scenario where the computer network 500 includes a plurality of network devices interconnected by links or networks. The plurality of network devices may be interconnected by the public Internet, a multiprotocol label switching (MPLS) network, a VPN, or the like. In an example shown in FIG. 5, customer edge (CE) routers (e.g., CE1 and CE2) are interconnected with provider edge (PE) routers (e.g., PE1, PE2), respectively, in order to communicate across a core network formed by routers (e.g., P1, P2, and P3).

In many embodiments, CE1 and CE2 routers may support IPv4, CE1 and CE2 routers may support both IPv4 and IPv6, and P1, P2, and P3 routers may only support IPv6. In other words, CE1 and CE2 are IPv4 routers that are interconnected via an IPv6 core network (e.g., P1, P2, and P3 routers) by placing dual-stack edge devices (e.g., PE1, PE2 routers), which support both IPv4 and IPv6, between each IPv4 router and the IPv6 core network. In numerous embodiments, the IPv6 core network may be a Segment Routing IPv6 (SRv6) core network. In a variety of embodiments, the computer network 500 may be controlled by the same entity. In other words, IPv4 access domain including CE1 and CE2 routers and the IPv6 core network may be controlled by the same entity.

In an example scenario, CE1 router may want to traceroute a path connecting CE1 router (e.g., the source device) to CE2 router (e.g., the destination device). Therefore, CE1 router may communicate a plurality of probe packets with progressively increasing TTL values to trace the path to CE2 router. Each probe packet's TTL value may limit a number of hops the probe packet can make before being discarded, prompting an error response packet from a last network device the probe packet traverses.

In several embodiments, as a probe packet reaches PE1 router, PE1 router may encapsulate the probe packet using an SRv6 outer header and enable a hop-limit propagate feature on the encapsulated probe packet. As a result, TTL value from inner IPv4 header is propagated to the outer SRv6 header. Thus, ensuring that error response packets (e.g., ICMPv6 Hop-Limit-Expiry message) generated by the IPv6 core network nodes (e.g., P2 and P3 routers) are communicated towards PE1 router. PE1 router may validate the ICMPv6 Hop-Limit-Expiry messages from the P1 and P2 routers and transmit a respective new ICMPv4 Hop-Limit-Expiry message with an encoding object (e.g., a TLV including the IPv6 address) towards CE1 router. CE1 router may decode the encoding object, extract the IPv6 address and other relevant underlay information, and display extracted underlay information 502 (e.g., IPv6 address, underlay service, or the like) as part of a trace route display 504.

Although a specific embodiment of an example computer network for path tracing between a source device and a destination device suitable for carrying out the various steps, processes, methods, and operations described herein is discussed with respect to FIG. 5, any of a variety of systems and/or processes may be utilized in accordance with embodiments of the disclosure. For example, the plurality of network devices shown in FIG. 5 can be cloud service routers. The elements depicted in FIG. 5 may also be interchangeable with other elements of FIGS. 1 - 4 and 6 - 10 as required to realize a particularly desired embodiment.

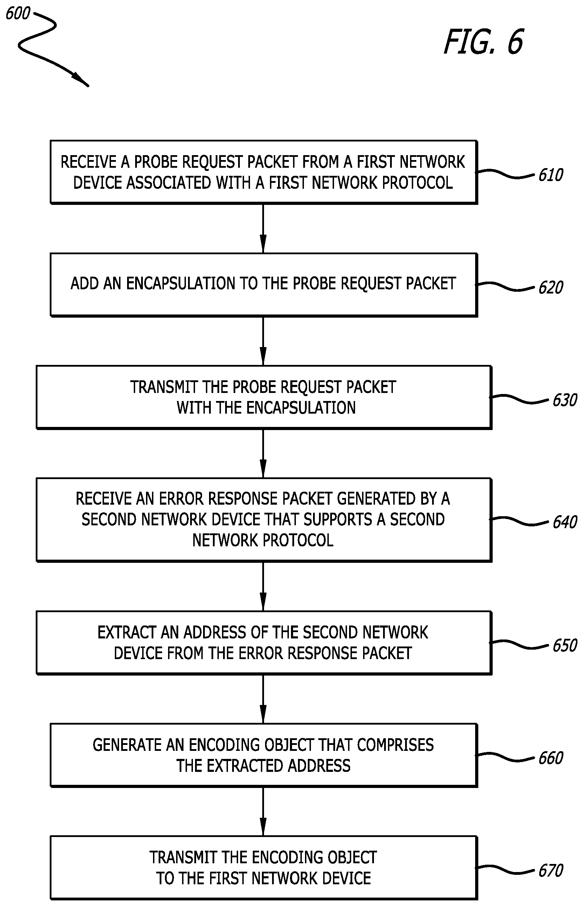

Referring to FIG. 6, a flowchart showing a process 600 for generation and communication of an encoding object in accordance with various embodiments of the disclosure is shown. In many embodiments, the process 600 may receive a probe request packet (block 610) from a first network device associated with a first network protocol. The first network protocol may be associated with an overlay network. The probe request packet may be an ICMP request message utilized for path tracing. The probe request packet may be associated with the first network protocol. The probe request packet may include a hop limit in form of a TTL value. Upon receiving the probe request packet, the process 600 may decrement the TTL value by one.

In a variety of embodiments, the process 600 may add an encapsulation to the probe request packet (block 620). For example, the process 600 may determine that a subsequent hop of the probe request packet does not support the first network protocol but supports a second network protocol. The second network protocol may be associated with an underlay network. Thus, the process 600 may encapsulate the probe request packet in an outer header that conforms to the second network protocol. The process 600 may further propagate a decremented TTL value in the encapsulation.

In further embodiments, the process 600 may transmit the probe request packet with the encapsulation (block 630). For example, the process 600 may transmit the encapsulated probe request packet to a subsequent device that supports the second network protocol. The process 600 may transmit the encapsulated probe request packet to the subsequent device in response to the decremented TTL value being non-zero.

In still further embodiments, the process 600 may receive an error response packet generated by a second network device that supports the second network protocol (block 640). The error response packet may be generated based on expiration of the TTL value in the encapsulated probe request packet. The error response packet may include an address of the second network device. The error response packet may conform to the second network protocol.

In numerous embodiments, the process 600 may extract the address of the second network device from the error response packet (block 650). The process 600 may extract the address of the second network device as the error response packet is associated with the second network protocol which may not be compatible with the first network device. In more embodiments, the process 600 may extract other required information, for example, an error code, a service identifier, service information, vendor specific-information, or the like from the error response packet. Examples of the service information may include, but are not limited to, a virtual private network (VPN) service, a segment routing service, or the like.

In various embodiments, the process 600 may generate an encoding object that comprises the extracted address (block 660). The encoding object may be a protocol agnostic container. In many further embodiments, the encoding object may include the other extracted information, for example, the error code, the service identifier, the service information, the vendor specific-information, or the like. In many examples, the encoding object may be a TLV object.

In yet more embodiments, the process 600 may transmit the encoding object to the first network device (block 670). In numerous embodiments, the encoding object may be transmitted as a standalone message to the first network device. The first network device may obtain the address of the second network device and other information required for path tracing from the encoding object.

Although a specific embodiment for generating and communicating encoding objects suitable for carrying out the various steps, processes, methods, and operations described herein is discussed with respect to FIG. 6, any of a variety of systems and/or processes may be utilized in accordance with embodiments of the disclosure. For example, the process 600 may employ various other approaches for communicating the encoding object to the first network device. In more embodiments, the encoding object may be transmitted to the first network device by appending the encoding object to an ICMP error response message. The elements depicted in FIG. 6 may also be interchangeable with other elements of FIGS. 1 - 5 and 7 - 10 as required to realize a particularly desired embodiment.

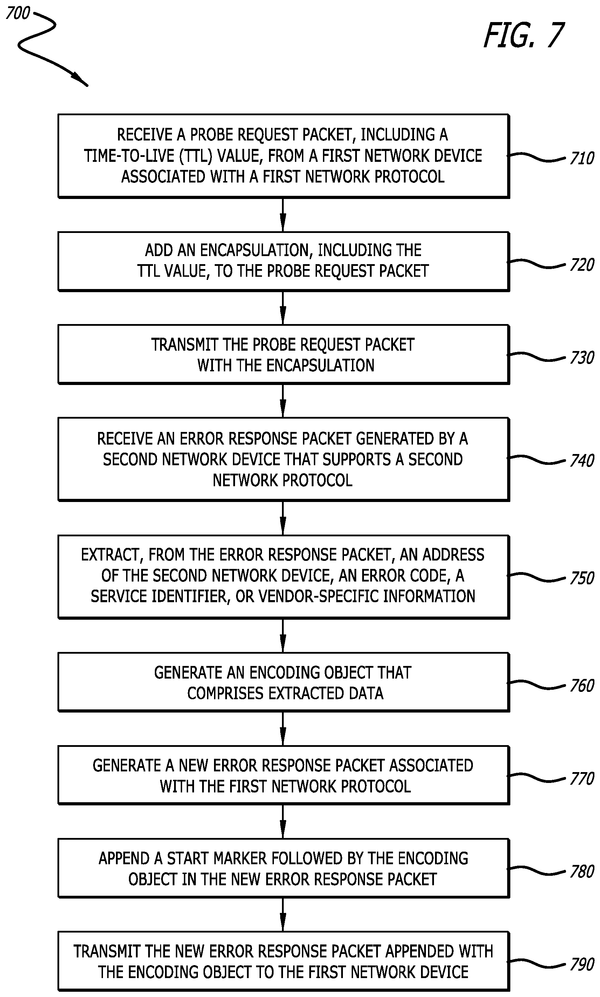

Referring to FIG. 7, a flowchart showing a process 700 for generation and communication of underlay information in accordance with various embodiments of the disclosure is shown. In many embodiments, the process 700 may receive a probe request packet, including a TTL value, from a first network device associated with a first network protocol (block 710). The probe request packet may be an ICMP request message utilized for path tracing. The probe request packet may be associated with the first network protocol. The probe request packet may include the hop limit in form of the TTL value. Upon receiving the probe request packet, the process 700 may decrement the TTL value by one.

In a variety of embodiments, the process 700 may add an encapsulation, including the TTL value, to the probe request packet (block 720). For example, the TTL value included in the probe request packet may be decremented and then copied to the encapsulation. In numerous embodiments, the encapsulation may correspond to an outer header that conforms to a second network protocol supported by next hop device.

In further embodiments, the process 700 may transmit the probe request packet with encapsulation (block 730). For example, the process 700 may transmit the encapsulated probe request packet to a subsequent device that supports the second network protocol. The process 700 may transmit the encapsulated probe request packet to the subsequent device in response to the decremented TTL value being non-zero.

In still further embodiments, the process 700 may receive an error response packet generated by a second network device that supports the second network protocol (block 740). The error response packet may be generated by the second network device upon expiration of the TTL value in the encapsulated probe request packet. The error response packet may include an address of the second network device. The error response packet may conform to the second network protocol.

In numerous additional embodiments, the process 700 may extract the address of the second network device, the error code, a service identifier, or vendor specific-information from the error response packet (block 750). The process 700 may extract the address of the second network device, the error code, a service identifier, or vendor specific-information as the error response packet is associated with the second network protocol which is not compatible with the first network device. In still more embodiments, the address of the second network device, the error code, the service identifier, or the vendor specific-information may refer to the underlay information required for tracing an underlay path or network.

In various embodiments, the process 700 may generate an encoding object that comprises the extracted data (block 760). In additional embodiments, the extracted data may include the address of the second network device, the error code, the service identifier, the vendor specific-information, or any other information required for tracing an underlay path or network. The encoding object may be a protocol agnostic container. As a result, the address of the second network device included in the encoding object may be readable by the first network device.

In yet more embodiments, the process 700 may generate a new error response packet associated with the first network protocol (block 770). For example, if the first network device supports IPv4 protocol and the received error response packet conformed to IPv6 protocol, the process 700 may generate the new error response packet conforming to IPv4 protocol.

In still yet more embodiments, the process 700 may append a start marker followed by the encoding object in the new error response packet (block 780). The start marker may be indicative of a start of the encoding object in the new error response packet. The start marker may allow for a quicker identification of a portion of the new error response packet that includes the encoding object. In other words, the start marker may allow for a quicker identification of a portion of the new error response packet that includes the underlay information. The start marker can be a unique pattern, recognizable by the first network device.

In many further embodiments, the process 700 may transmit the new error response packet appended with the encoding object to the first network device (block 790). In several more embodiments, inclusion of the encoding object in the new error response packet enables the first network device to obtain the address of the second network device and other information required for path tracing.

Although a specific embodiment for generation and communication of underlay information suitable for carrying out the various steps, processes, methods, and operations described herein is discussed with respect to FIG. 7, any of a variety of systems and/or processes may be utilized in accordance with embodiments of the disclosure. For example, the new error response packet may be generated in accordance with an underlay network protocol or an overlay network protocol associated with the first network device. This allows for a complete and efficient network tracing in multi-protocol underlay networks. The elements depicted in FIG. 7 may also be interchangeable with other elements of FIGS. 1 - 6 and 8 - 10 as required to realize a particularly desired embodiment.

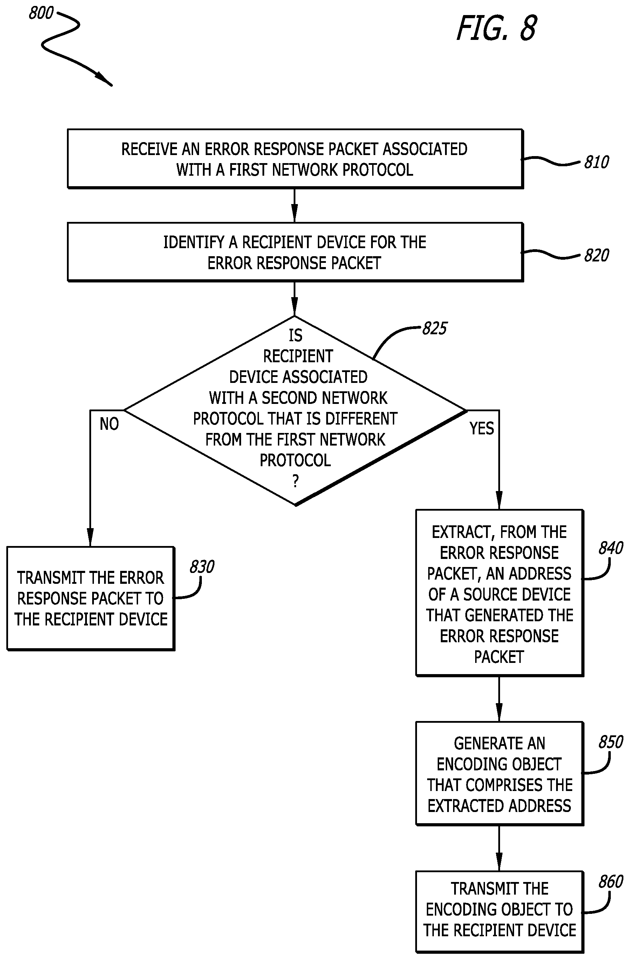

Referring to FIG. 8, a flowchart showing a process 800 for path tracing in a multi-protocol underlay network in accordance with various embodiments of the disclosure is shown. In many embodiments, the process 800 may receive an error response packet associated with the first network protocol (block 810). In several embodiments, the error response packet may include an address of a source device that generated the error response packet. In several more embodiments, the error response packet may further include an error code, a service identifier, vendor specific-information, or other underlay information.

In a variety of embodiments, the process 800 may identify a recipient device for the error response packet (block 820). The process 800 may identify the recipient device based on a probe request packet associated with the error response packet. For example, the error response packet may include a header and a portion of a payload of the probe request packet in response to which the error response packet was generated. The process 800 may detect a source of the probe request packet to identify the recipient device.

In further embodiments, the process 800 may determine whether the recipient device is associated with a second network protocol that is different from the first network protocol (block 825). The process 800 may perform such a determination to confirm whether the received error response packet is compatible with the recipient device. In more embodiments, the process 800 may determine the network protocol associated with the recipient device based on the probe request packet.

In further additional embodiments, if the recipient device is not associated with the second network protocol (e.g., the recipient device may be associated with the first network protocol), the process 800 may transmit the error response packet to the recipient device (block 830). The error response packet that conforms to the first network protocol may be determined as compatible with the recipient device. The recipient device may decode the error response packet to obtain the information required for network path tracing.

In still further embodiments, if the recipient device is associated with the second network protocol, the process 800 may extract, from the error response packet, the address of the source device of the error response packet (block 840). In yet more embodiments, the process 800 may further extract an error code, a service identifier, vendor specific-information, or other underlay information from the error response packet associated with the second network protocol.

In numerous embodiments, the process 800 may generate an encoding object that comprises the extracted data (block 850). In several additional embodiments, the extracted data may include the address of the source device that generated the error response packet, the error code, the service identifier, the vendor specific-information, or any other information required for tracing an underlay path or network. The encoding object may be a protocol agnostic container. As a result, the address of the source of the error response packet included in the encoding object may be readable by the recipient of the encoding object.

In many further embodiments, the process 800 may transmit the encoding object to the recipient device (block 860). In still yet more embodiments, the encoding object may be transmitted as a standalone message. In certain embodiments, the encoding object may be appended to a new error response packet that is compatible with the second network protocol supported by the recipient device.

Although a specific embodiment for path tracing in multi-protocol underlay network suitable for carrying out the various steps, processes, methods, and operations described herein is discussed with respect to FIG. 8, any of a variety of systems and/or processes may be utilized in accordance with embodiments of the disclosure. For example, extracting the address of the source device of the error response packet and generating an encoding object may be performed at an edge device situated at boundaries of two networks with differing protocols. The elements depicted in FIG. 8 may also be interchangeable with other elements of FIGS. 1 - 7, 9, and 10 as required to realize a particularly desired embodiment.

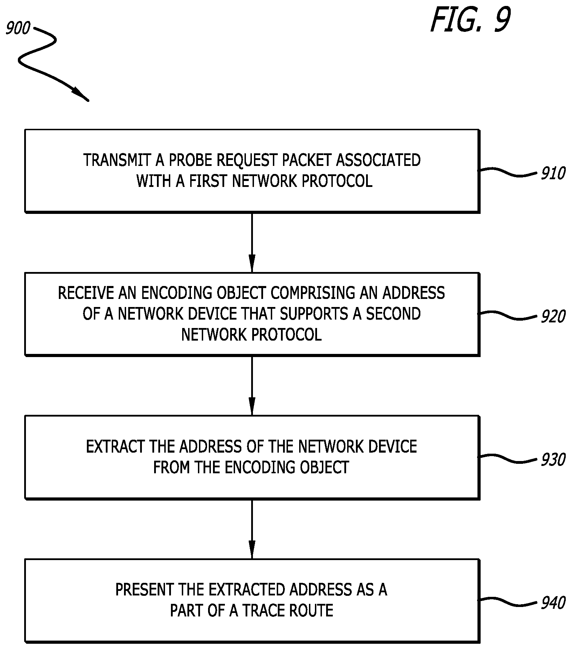

Referring to FIG. 9, a flowchart showing a process 900 for path tracing in a multi-protocol network in accordance with various embodiments of the disclosure is shown. In many embodiments, the process 900 may transmit a probe request packet associated with a first network protocol (block 910). The probe request packet may include a hop limit in form of a TTL value. In many examples, the probe request packet can be an ICMP request message. In numerous embodiments, an ICMP request packet may be generated by a source device to solicit network information or test connectivity with a destination device. The ICMP request packet may include an ICMP Echo Request message, for example, a ping, which prompts the destination device to respond with an ICMP error response packet.

In a variety of embodiments, the process 900 may receive an encoding object comprising an address of a network device that supports a second network protocol (block 920). In numerous additional embodiments, the encoding object may include additional information such as an address length, a service identifier, an error code, vendor specific information, or the like. In more embodiments, the encoding object may be received in response to the probe request packet. In some more embodiments, the encoding object may be received as a standalone message. In certain embodiments, the encoding object may be received in an ICMP error response message conforming to the first protocol. For example, the encoding object can be a protocol agnostic container defined to carry underlay information in scenarios of multi-protocol underlay networks.

In further embodiments, the process 900 may extract the address of the network device from the encoding object (block 930). The extracted address of the network device may form a portion of a trace route of the transmitted probe request packet. In many additional embodiments, the process 900 may further extract the additional information such as the address length, the service identifier, the error code, the vendor specific information, or the like included in the encoding object. In further additional embodiments, the process 900 may present the extracted address as a part of the trace route (block 940). The process 900 may present the extracted address by way of a user interface associated with the process 900.

Although a specific embodiment for path tracing in multi-protocol network suitable for carrying out the various steps, processes, methods, and operations described herein is discussed with respect to FIG. 9, any of a variety of systems and/or processes may be utilized in accordance with embodiments of the disclosure. For example, a probing device, different from the source device, can also transmit the probe request packet for tracing a path between the source device and a destination device. Therefore, a complete and detailed path can be traced. The elements depicted in FIG. 9 may also be interchangeable with other elements of FIGS. 1 - 8 and 10 as required to realize a particularly desired embodiment.

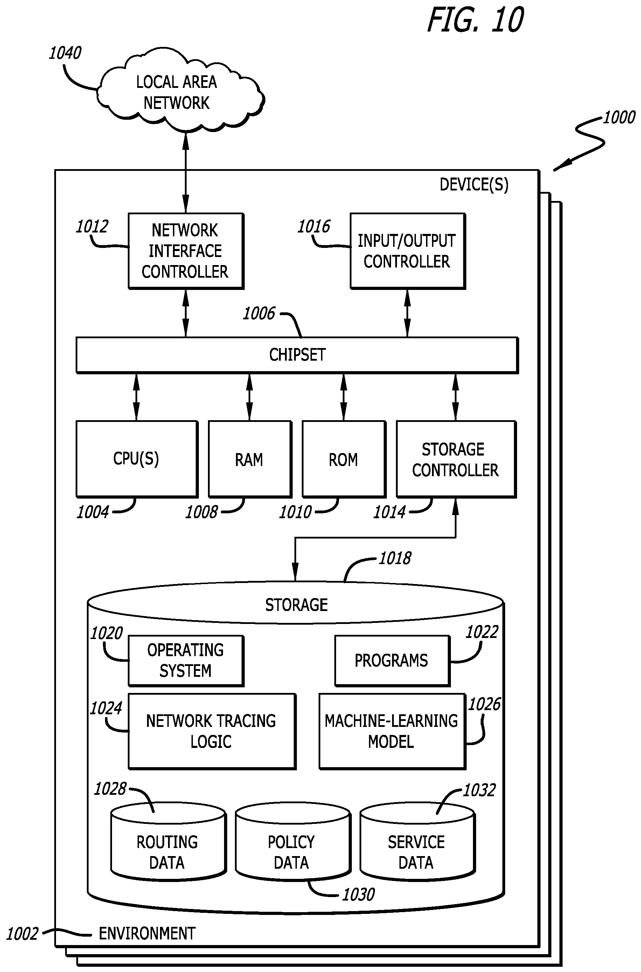

Referring to FIG. 10, a conceptual block diagram for one or more devices 1000 capable of executing components and logic for implementing the functionality and embodiments described above is shown. The embodiment of the conceptual block diagram depicted in FIG. 10 can illustrate a conventional server computer, workstation, desktop computer, laptop, tablet, network appliance, e-reader, smartphone, or other computing device, and can be utilized to execute any of the application and/or logic components presented herein. The device 1000 may, in some examples, correspond to physical devices or to virtual resources described herein.

In many embodiments, the device 1000 may include an environment 1002 such as a baseboard or "motherboard," in physical embodiments that can be configured as a printed circuit board with a multitude of components or devices connected by way of a system bus or other electrical communication paths. Conceptually, in virtualized embodiments, the environment 1002 may be a virtual environment that encompasses and executes the remaining components and resources of the device 1000. In more embodiments, one or more processors 1004, such as, but not limited to, central processing units ("CPUs") can be configured to operate in conjunction with a chipset 1006. The processor(s) 1004 can be standard programmable CPUs that perform arithmetic and logical operations required for the operation of the device 1000.

In additional embodiments, the processor(s) 1004 can perform one or more operations by transitioning from one discrete, physical state to the next through the manipulation of switching elements that differentiate between and change these states. Switching elements generally include electronic circuits that maintain one of two binary states, such as flip-flops, and electronic circuits that provide an output state based on the logical combination of the states of one or more other switching elements, such as logic gates. These basic switching elements can be combined to create more complex logic circuits, including registers, adders-subtractors, arithmetic logic units, floating-point units, and the like.

In various embodiments, the chipset 1006 may provide an interface between the processor(s) 1004 and the remainder of the components and devices within the environment 1002. The chipset 1006 can provide an interface to a random-access memory ("RAM") 1008, which can be used as the main memory in the device 1000 in additional embodiments. The chipset 1006 can further be configured to provide an interface to a computer-readable storage medium such as a read-only memory ("ROM") 1010 or non-volatile RAM ("NVRAM") 1008 for storing basic routines that can help with various tasks such as, but not limited to, starting up the device 1000 and/or transferring information between the various components and devices. The ROM 1010 or NVRAM 1008 can also store other application components necessary for the operation of the device 1000 in accordance with various embodiments described herein.

Different embodiments of the device 1000 can be configured to operate in a networked environment using logical connections to remote computing devices and computer systems through a network, such as the network 1040. The chipset 1006 can include functionality for providing network connectivity through a network interface card ("NIC") 1012, which may comprise a gigabit Ethernet adapter or similar component. The NIC 1012 can be capable of connecting the device 1000 to other devices over the network 1040. It is contemplated that multiple NICs 1012 may be present in the device 1000, connecting the device to other types of networks and remote systems.

In further embodiments, the device 1000 can be connected to a storage 1018 that provides non-volatile storage for data accessible by the device 1000. The storage 1018 can, for example, store an operating system 1020, applications 1022, and data 1028, 1030, 1032, which are described in greater detail below. The storage 1018 can be connected to the environment 1002 through a storage controller 1014 connected to the chipset 1006. In various embodiments, the storage 1018 can consist of one or more physical storage units. The storage controller 1014 can interface with the physical storage units through a serial attached SCSI ("SAS") interface, a serial advanced technology attachment ("SATA") interface, a fiber channel ("FC") interface, or other type of interface for physically connecting and transferring data between computers and physical storage units.

The device 1000 can store data within the storage 1018 by transforming the physical state of the physical storage units to reflect the information being stored. The specific transformation of physical state can depend on various factors. Examples of such factors can include, but are not limited to, the technology used to implement the physical storage units, whether the storage 1018 is characterized as primary or secondary storage, and the like.

For example, the device 1000 can store information within the storage 1018 by issuing instructions through the storage controller 1014 to alter the magnetic characteristics of a particular location within a magnetic disk drive unit, the reflective or refractive characteristics of a particular location in an optical storage unit, or the electrical characteristics of a particular capacitor, transistor, or other discrete component in a solid-state storage unit, or the like. Other transformations of physical media are possible without departing from the scope and spirit of the present description, with the foregoing examples provided only to facilitate this description. The device 1000 can further read or access information from the storage 1018 by detecting the physical states or characteristics of one or more particular locations within the physical storage units.

In addition to the storage 1018 described above, the device 1000 can have access to other computer-readable storage media to store and retrieve information, such as program modules, data structures, or other data. It should be appreciated by those skilled in the art that computer-readable storage media is any available media that provides for the non-transitory storage of data and that can be accessed by the device 1000. In some examples, the operations performed by a cloud computing network, and or any components included therein, may be supported by one or more devices similar to device 1000. Stated otherwise, some or all of the operations performed by the cloud computing network, and or any components included therein, may be performed by one or more devices 1000 operating in a cloud-based arrangement.

By way of example, and not limitation, computer-readable storage media can include volatile and non-volatile, removable and non-removable media implemented in any method or technology. Computer-readable storage media includes, but is not limited to, RAM, ROM, erasable programmable ROM ("EPROM"), electrically-erasable programmable ROM ("EEPROM"), flash memory or other solid-state memory technology, compact disc ROM ("CD-ROM"), digital versatile disk ("DVD"), high definition DVD ("HD-DVD"), BLU-RAY, or other optical storage, magnetic cassettes, magnetic tape, magnetic disk storage or other magnetic storage devices, or any other medium that can be used to store the desired information in a non-transitory fashion.

As mentioned briefly above, the storage 1018 can store an operating system 1020 utilized to control the operation of the device 1000. According to one embodiment, the operating system comprises the LINUX operating system. According to another embodiment, the operating system comprises the WINDOWS^{®} SERVER operating system from MICROSOFT Corporation of Redmond, Washington. According to further embodiments, the operating system can comprise the UNIX operating system or one of its variants. It should be appreciated that other operating systems can also be utilized. The storage 1018 can store other system or application programs and data utilized by the device 1000.

In various embodiments, the storage 1018 or other computer-readable storage media is encoded with computer-executable instructions which, when loaded into the device 1000, may transform it from a general-purpose computing system into a special-purpose computer capable of implementing the embodiments described herein. These computer-executable instructions may be stored as application 1022 and transform the device 1000 by specifying how the processor(s) 1004 can transition between states, as described above. In additional embodiments, the device 1000 has access to computer-readable storage media storing computer-executable instructions which, when executed by the device 1000, perform the various processes described above with regard to FIGS. 1 - 9. In more embodiments, the device 1000 can also include computer-readable storage media having instructions stored thereupon for performing any of the other computer-implemented operations described herein.

In still further embodiments, the device 1000 can also include one or more input/output controllers 1016 for receiving and processing input from a number of input devices, such as a keyboard, a mouse, a touchpad, a touch screen, an electronic stylus, or other type of input device. Similarly, an input/output controller 1016 can be configured to provide output to a display, such as a computer monitor, a flat panel display, a digital projector, a printer, or other type of output device. Those skilled in the art will recognize that the device 1000 might not include all of the components shown in FIG. 10, and can include other components that are not explicitly shown in FIG. 10, or might utilize an architecture completely different than that shown in FIG. 10.

As described above, the device 1000 may support a virtualization layer, such as one or more virtual resources executing on the device 1000. In some examples, the virtualization layer may be supported by a hypervisor that provides one or more virtual machines running on the device 1000 to perform functions described herein. The virtualization layer may generally support a virtual resource that performs at least a portion of the techniques described herein.

In many embodiments, the device 1000 can include a network tracing logic 1024 that can be configured to perform one or more of the various steps, processes, operations, and/or other methods that are described above. Often, the network tracing logic 1024 can be a set of instructions stored within a non-volatile memory that, when executed by the processor(s)/controller(s) 1004 can carry out these steps, etc. In additional embodiments, the network tracing logic 1024 may be a client application that resides on a network-connected device, such as, but not limited to, a server, switch, personal or mobile computing device, an access point (AP). In various embodiments, the network tracing logic 1024 can utilize tracerouting tools and applications known in the art to trace a network protocol supported by a subsequent device or determine an address of a source of a received error response packet.

In several embodiments, the network tracing logic 1024, upon receiving an error response packet (e.g., an ICMP error response packet), can create an encoding object to convey underlay information to a host device. The encoding object may be a protocol agnostic container, for example, a TLV object that can store the underlay information (e.g., an address) of an underlay network device that supports a different network protocol from the host device. In several more embodiments, the network tracing logic 1024 can append the encoding object in a new error response packet conforming to the network protocol of the host device. In numerous embodiments, the network tracing logic 1024 can nest the encoding object within a TLV field in the new error response packet. In numerous additional embodiments, the network tracing logic 1024 can embed a start marker before the encoding object in the new error response packet. This allows easy identification of the encoding object without having to traverse other portions of the new error response packet. Thus, the network tracing logic 1024 when executed by the device 1000 (e.g., an edge device or a host device) may enable tracing of a path spanning across multiple networks supporting different protocols.

In a number of embodiments, the storage 1018 can include routing data 1028. In additional embodiments, the routing data 1028 can include information, for example, routing tables. Routing table may contain various entries that map destination IP addresses to next hop or outgoing ports. Routing tables may enable the device 1000 in making packet forwarding decisions. MAC address table is an example of a routing table. MAC address table may include destination MAC addresses mapped to corresponding switch ports. The routing data 1028 may further store a mapping between IP addresses and MAC addresses within a network. Such mapping may be utilized to translate IP addresses to MAC addresses for proper forwarding of packets.

In various embodiments, the storage 1018 can include policy data 1030. In several embodiments, the policy data 1030 can comprise information regarding access control lists. Access control lists may delineate a set of rules that determine what type of traffic is allowed or denied on the network. The set of rules can be based on various criteria such as source or destination IP addresses, port numbers, or communication protocols. In several more embodiments, the policy data 1030 can include QoS policies. For example, QoS policies can be used to prioritize certain types of traffic (e.g., encoding objects and error response packets) over others to ensure that critical applications receive required latency requirements. In numerous additional embodiments, the policy data 1030 can further include security policies, authentication and authorization policies, or the like.

In still more embodiments, the storage 1018 can include service data 1032. The service data 1032 may include service codes, metadata, and ancillary information that is included in packets and frames being transmitted. The service data 1032 can enable the device 1000 to manage, route, and ensure the integrity and security of packets and frames as they are transmitted over a network.

Finally, in many embodiments, data may be processed into a format usable by a machine-learning model 1026 (e.g., feature vectors), and or other pre-processing techniques. The machine-learning ("ML") model 1026 may be any type of ML model, such as supervised models, reinforcement models, and/or unsupervised models. The ML model 1026 may include one or more of linear regression models, logistic regression models, decision trees, Naive Bayes models, neural networks, k-means cluster models, random forest models, and/or other types of ML models 1026. The ML model 1026 may be configured to learn to identify a network protocol supported by a subsequent device based on a destination address in the probe request packet. The network protocol may be identified by the machine-learning model 1026 based on historical data associated with forwarding of probe request packets.

The ML model(s) 1026 can be configured to generate inferences to make predictions or draw conclusions from data. An inference can be considered the output of a process of applying a model to new data. This can occur by learning from infrastructure data, sustainability data, and/or health data and use that learning to predict future outcomes. These predictions are based on patterns and relationships discovered within the data. To generate an inference, the trained model can take input data and produce a prediction or a decision. The input data can be in various forms, such as images, audio, text, or numerical data, depending on the type of problem the model was trained to solve. The output of the model can also vary depending on the problem, and can be a single number, a probability distribution, a set of labels, a decision about an action to take, etc. Ground truth for the ML model(s) 1026 may be generated by human/administrator verifications or may compare predicted outcomes with actual outcomes.

In summary, devices, systems, methods, and processes for multi-protocol underlay network tracing are described herein. A network device associated with a first network protocol usually fails to detect other network devices that support a second network protocol, during trace routing. This can lead to incomplete and inaccurate path tracing. Thus, an edge device upon receiving an error response packet may determine whether the error response packet conforms to a network protocol supported by a host device. If the error response packet conforms to a different network protocol, the edge device may extract information required for path tracing from the error response packet. The extracted information may be included in a protocol agnostic encoding object and transmitted to the host device. The encoding object can be transmitted as a standalone message or can be appended in an error response packet. Thus, enabling underlay path tracing in end-to-end managed networks.

Exemplary embodiments are set out in the following numbered clauses:
1. A device, comprising:
   a processor;
   a network interface controller configured to provide access to a network; and
   a memory communicatively coupled to the processor, wherein the memory comprises a network tracing logic that is configured to:
      receive an error response packet, wherein the error response packet comprises an address of a first network device that supports a first network protocol;
      extract the address of the first network device from the error response packet;
      generate an encoding object that comprises the extracted address; and
      transmit the encoding object to a second network device that supports a second network protocol.
2. The device of clause 1, wherein the encoding object is a Type-Length-Value (TLV) object.
3. The device of clause 1, wherein the encoding object is transmitted as a standalone message to the second network device.
4. The device of clause 1, wherein to transmit the encoding object to the second network device, the network tracing logic is further configured to:
   generate a new error response packet associated with the second network protocol;
   append the encoding object in the new error response packet; and
   transmit the new error response packet appended with the encoding object to the second network device.
5. The device of clause 4, wherein the network tracing logic is further configured to append a start marker to the new error response packet, wherein the start marker is configured to indicate a start of the encoding object.
6. The device of clause 4, wherein the new error response packet includes a Type-Length-Value (TLV) field, and wherein the encoding object is nested within the TLV field.
7. The device of clause 1, wherein the error response packet further comprises at least one of: an error code, a service identifier, or vendor-specific information associated with the first network device.
8. The device of clause 7, wherein the error code is associated with a Time-To-Live (TTL) expiry error.
9. The device of clause 7, wherein the error code is associated with a Packet-Too-Big (PTB) error.
10. The device of clause 7, wherein the network tracing logic is further configured to extract, from the error response packet, at least one of: the error code, the service identifier, or the vendor-specific information.
11. The device of clause 10, wherein the encoding object further comprises at least one of: the error code, the service identifier, or the vendor-specific information extracted from the error response packet.
12. The device of clause 1, wherein the first network protocol is associated with an underlay network and the second network protocol is associated with an overlay network.
13. The device of clause 1, wherein the network tracing logic is further configured to:
   receive a probe request packet from the second network device;
   add an encapsulation to the probe request packet based on the first network protocol; and
   transmit the probe request packet with the encapsulation to one of the first network device or a third network device that supports the first network protocol, wherein the error response packet is received in response to transmitting the probe request packet with the encapsulation.
14. The device of clause 13, wherein the probe request packet is associated with the second network protocol.
15. The device of clause 13, wherein the probe request packet includes a Time-To-Live (TTL) value.
16. The device of clause 15, wherein the network tracing logic is further configured to propagate the TTL value of the probe request packet in the encapsulation.
17. The device of clause 1, wherein the device is an edge device that supports the first network protocol and the second network protocol.
18. A device, comprising:
   a processor;
   at least one network interface controller configured to provide access to a network; and
   a memory communicatively coupled to the processor, wherein the memory comprises a network tracing logic that is configured to:
      transmit a probe request packet associated with a first network protocol;
      receive, in response to transmitting the probe request packet, an encoding object that comprises an address of a network device, wherein the network device supports a second network protocol that is different from the first network protocol; and
      obtain the address of the network device from the encoding object.
19. The device of clause 18, wherein the network tracing logic is further configured to present the obtained address as a part of a trace route path.
20. A method, comprising:
   receiving an error response packet, wherein the error response packet comprises an address of a first network device that supports a first network protocol;
   extracting the address of the first network device from the error response packet;
   generating an encoding object that comprises the extracted address; and
      transmitting the encoding object to a second network device that supports a second network protocol.

Although the present disclosure has been described in certain specific aspects, many additional modifications and variations would be apparent to those skilled in the art. In particular, any of the various processes described above can be performed in alternative sequences and/or in parallel (on the same or on different computing devices) in order to achieve similar results in a manner that is more appropriate to the requirements of a specific application. It is therefore to be understood that the present disclosure can be practiced other than specifically described without departing from the scope and spirit of the present disclosure. Thus, embodiments of the present disclosure should be considered in all respects as illustrative and not restrictive. It will be evident to the person skilled in the art to freely combine several or all of the embodiments discussed here as deemed suitable for a specific application of the disclosure. Throughout this disclosure, terms like "advantageous", "exemplary" or "example" indicate elements or dimensions which are particularly suitable (but not essential) to the disclosure or an embodiment thereof and may be modified wherever deemed suitable by the skilled person, except where expressly required. Accordingly, the scope of the disclosure should be determined not by the embodiments illustrated, but by the appended claims and their equivalents.

Any reference to an element being made in the singular is not intended to mean "one and only one" unless explicitly so stated, but rather "one or more." All structural and functional equivalents to the elements of the above-described preferred embodiment and additional embodiments as regarded by those of ordinary skill in the art are hereby expressly incorporated by reference and are intended to be encompassed by the present claims.

Moreover, no requirement exists for a system or method to address each and every problem sought to be resolved by the present disclosure, for solutions to such problems to be encompassed by the present claims. Furthermore, no element, component, or method step in the present disclosure is intended to be dedicated to the public regardless of whether the element, component, or method step is explicitly recited in the claims. Various changes and modifications in form, material, workpiece, and fabrication material detail can be made, without departing from the spirit and scope of the present disclosure, as set forth in the appended claims, as might be apparent to those of ordinary skill in the art, are also encompassed by the present disclosure.

## Claims

1. A method, comprising:
receiving an error response packet, wherein the error response packet comprises an address of a first network device that supports a first network protocol;
extracting the address of the first network device from the error response packet;
generating an encoding object that comprises the extracted address; and
transmitting the encoding object to a second network device that supports a second network protocol.

2. The method of claim 1, wherein the encoding object is a Type-Length-Value (TLV) object.

3. The method of claim 1 or 2, wherein the encoding object is transmitted as a standalone message to the second network device.

4. The method of any of claims 1 to 3, wherein to transmit the encoding object to the second network device, the network tracing logic is further configured to:
generate a new error response packet associated with the second network protocol;
append the encoding object in the new error response packet; and
transmit the new error response packet appended with the encoding object to the second network device;
optionally wherein the network tracing logic is further configured to append a start marker to the new error response packet, wherein the start marker is configured to indicate a start of the encoding object.

5. The method of claim 4, wherein the new error response packet includes a Type-Length-Value (TLV) field, and wherein the encoding object is nested within the TLV field.

6. The method of any of claims 1 to 5, wherein the error response packet further comprises at least one of: an error code, a service identifier, or vendor-specific information associated with the first network device.

7. The method of claim 6, wherein the error code is associated with a Time-To-Live (TTL) expiry error and/or wherein the error code is associated with a Packet-Too-Big (PTB) error.

8. The method of claims 6 or 7, wherein the network tracing logic is further configured to extract, from the error response packet, at least one of: the error code, the service identifier, or the vendor-specific information, optionally wherein the encoding object further comprises at least one of: the error code, the service identifier, or the vendor-specific information extracted from the error response packet.

9. The method of any of claims 1 to 8, wherein the first network protocol is associated with an underlay network and the second network protocol is associated with an overlay network.

10. The method of any of claims 1 to 9, wherein the network tracing logic is further configured to:
receive a probe request packet from the second network device;
add an encapsulation to the probe request packet based on the first network protocol; and
transmit the probe request packet with the encapsulation to one of the first network device or a third network device that supports the first network protocol, wherein the error response packet is received in response to transmitting the probe request packet with the encapsulation.

11. The method of claim 10, wherein the probe request packet is associated with the second network protocol, and/or wherein the probe request packet includes a Time-To-Live (TTL) value, optionally wherein the network tracing logic is further configured to propagate the TTL value of the probe request packet in the encapsulation.

12. The method of any of claims 1 to 11, wherein the device is an edge device that supports the first network protocol and the second network protocol.

13. A method, comprising:
transmitting a probe request packet associated with a first network protocol;
receiving, in response to transmitting the probe request packet, an encoding object that comprises an address of a network device, wherein the network device supports a second network protocol that is different from the first network protocol; and
obtaining the address of the network device from the encoding object;
the method optionally further comprising presenting the obtained address as a part of a trace route path.

14. A device, comprising:
means for transmitting a probe request packet associated with a first network protocol;
means for receiving, in response to transmitting the probe request packet, an encoding object that comprises an address of a network device, wherein the network device supports a second network protocol that is different from the first network protocol; and
means for obtaining the address of the network device from the encoding object;
the device optionally further comprising means for presenting the obtained address as a part of a trace route path.

15. A device, comprising:
means for receiving an error response packet, wherein the error response packet comprises an address of a first network device that supports a first network protocol;
means for extracting the address of the first network device from the error response packet;
means for generating an encoding object that comprises the extracted address; and
means for transmitting the encoding object to a second network device that supports a second network protocol.
